# EUROPEAN PATENT APPLICATION

(11) **EP 2 336 194 A1**
(43) Date of publication of application: **22.06.2011**
(21) Application number: 09179484.2
(22) Date of filing: 16.12.2009
(51) Int. Cl.: C08B 37/00, C08H 8/00, D21C 3/20

(54) **Process for the treatment of lignocellulosic feed**

(71) Applicant: Shell Internationale Research Maatschappij B.V., 2596 HR The Hague (NL)
(72) Inventor: Van der Heide, Evert, 1031 HW Amsterdam (NL); Zhang, Ting, 1031 HW Amsterdam (NL)
(74) Representative: Matthezing, Robert Maarten

(57) **Abstract**

The present invention provides a process for treating lignocellulosic biomass material, comprising the steps of:
(a)contacting the lignocellulosic biomass material with a solvent comprising water and formic acid at a temperature in the range of from 100 °C to 200 °C and at a pressure of not more than 10 bar (a) to obtain a first liquid stream comprising hydrolysed hemicellulose and a second stream comprising lignin and cellulose;
(b)separating the first liquid stream from the second stream;
(c) washing the second stream obtained in step (a) with a water and a solvent soluble in water to obtain a liquid stream comprising lignin and a solid residue comprising cellulose;
(d) subjecting the liquid stream obtained in step (c) to atleast one of evaporation and distillation to obtain a slurry comprising precipitated lignin; and
(e) subjecting the slurry obtained in step (d) to sedimentation followed by anyone of filtration and centrifugation to obtain lignin and a spent aqueous stream.

## Description

### Field of the invention

The present invention relates to a process for treatment of lignocellulosic biomass material to separate the lignocellulosic biomass material into cellulose, hemicellulose and lignin in order to make it suitable for further Processing.

### Background of the invention

With the diminishing supply of crude oil, the use of renewable energy sources is becoming increasingly important as a feedstock for production of hydrocarbon compounds. Plants and animal biomass are being used to produce liquid and gaseous hydrocarbon compounds. One of the advantages of using biomass is that the CO₂ balance is more favourable as compared with the conventional hydrocarbon feedstock.

One of the most commonly used biomass material used is lignocellulosic material for instance, agriculture waste, forest residue, wood chips, straw, chaff, grain, grasses, corn, corn husks, weeds, aquatic plants, hay or any cellulose containing biological material or material of biological origin. These biomass materials primarily consist of cellulose, hemicellulose, and lignin bonded together in a complex gel structure along with small quantities of extractives, pectins, proteins, and ash.

Cellulose present in the lignocellulosic material can be further processed to obtain sugars and other organic compounds which can later be converted to fuels and chemicals. Due to the complex chemical structure of the biomass material, microorganisms and enzymes used for fermentation in the production of fuels cannot effectively attack the cellulose without prior treatment because the cellulose is highly inaccessible to enzymes or bacteria, thereby making it difficult for further processing. Further, the separation of biomass constituents is complicated by the fact that lignin is intertwined and linked in various ways with cellulose and hemicellulose. Accordingly, successful commercial use of biomass as a chemical feedstock depends on the separation of the individual constituents of the lignocellulosic biomass to increase the accessibility of the constituents for further processing

Existing pre-treatment processes include alkali treatment, ammonia explosion, ionic treatment, and others. The use of organic solvents for example, formic acid and acetic acid in cellulose production has recently been commercialized in the pre-treatment procedures; however solvent recovery remains an issue and is an expensive process.

Other existing pre-treatment that exist, utilise steam for destructuring of biomass. "Steam explosion", "steam cooking", "pressure cooking in water", "weak acid hydrolysis", "liquid hot water pre-treatment", and "hydrothermal treatment" are the commonly used techniques of pre-treatment that utilse steam. Steam cooking procedures typically involve the use of pressure of saturated steam in a reactor vessel in a well-defined relationship with temperature. Because an inverse relationship generally exists between cooking time and temperature, when a pressure range is stated in conjunction with a range of cooking times, the shorter times are associated with the higher pressures (and temperatures), and the longer times with the lower pressures. As an aid in interpreting and presenting data from steam cooking, a "severity index" has been widely adopted and is defined as the product of treatment time and an exponential function of temperature that doubles for every 10°C rise in temperature. This function has a value of 1 at 100°C. One disadvantage associated with this technique is that steam cooking is known to change the properties of lignocellulosic materials.

But nearly all intensively-studied pre-treatments share one or several of the common shortcomings which include severe pre-treatment conditions , resulting in degradation of sugars and formation of inhibitors, low or modest cellulose digestibility because of the presence of residual lignin and hemicellulose resulting in large utility/energy consumption and requiring a huge capital investment , slow hydrolysis rate because a significant fraction of pre-treated lignocellulose remains crystalline and less co-utilization of other major components of lignocellulose. These problems exist in all pre-treatment techniques except in the case of the recent organosolv techniques.

Organosolv pre-treatments use a lignin-extracting solvent blend containing catalysts such as acids or alkalis, and water/organic solvents (e.g., ethanol and methanol) to extract lignin in high temperature and high pressure digesters. However the organosolv pre-treatments too are characterised by high capital costs, high energy requirement and problems of solvent recovery. The publication "Pretreatment of Miscanthus x giganteus using the Ethanol Organosolv Process for Ethanol Production" by Nicolas Brosse, Poulomi Sannigrahi and Arthur Ragauskas, Ind. Eng. Chem. Res. 2009, 48, 8328-8334, discloses the use of an organosolv process using ethanol and sulphuric acid for the pretreatment of lignocellulose. However, the process conditions use high pressure that requires expensive material, and increases explosion and fire hazard when employed on an industrial scale. Moreover, the use of ethanol in the first pre-treatment stage requires separation of the ethanol for useful recycling from this stage already, which is energy consuming and costly due to the size of the streams to separate.

It is therefore evident that while some processes for pre-treatment of the lignocellulosic biomass are disclosed in the art, there is a need for an economically feasible and commercially viable process for the pre-treatment of lignocellulosic biomass.

### SUMMARY OF THE INVENTION

Accordingly, the present invention provides a process for treating lignocellulosic biomass material, comprising the steps of:
(a)contacting the lignocellulosic biomass material with a solvent comprising water and formic acid at a temperature in the range of from 100 °C to 200 °C and at a pressure of not more than 10 bar (a) to obtain a first liquid stream comprising hydrolysed hemicellulose and a second stream comprising lignin and cellulose;
(b)separating the first liquid stream from the second stream; (c) washing the second stream obtained in step (a) with a water and a solvent soluble in water to obtain a liquid stream comprising lignin and a solid residue comprising cellulose;
(d) subjecting the liquid stream obtained in step (c) to at least one of evaporation and distillation to obtain a slurry comprising precipitated lignin; and
(e) subjecting the slurry obtained in step (d) to sedimentation followed by anyone of filtration and centrifugation to obtain lignin and a spent aqueous stream.

### Brief description of the drawings

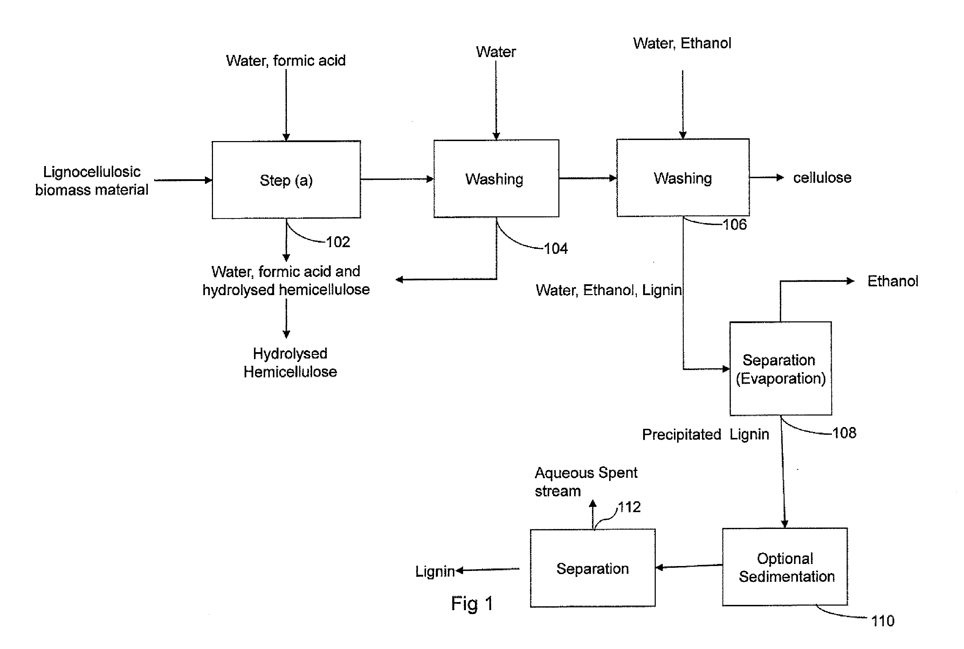

Figure 1 shows a schematic diagram of the process according to the invention.

### Detailed description

It has now been found that lignocellulosic biomass material can be efficiently separated into hemicellulose, cellulose and lignin when subjected to a series of steps comprising subjecting the lignocellulosic biomass material to an elevated temperature in presence of water and formic acid to hydrolyse the hemicellulose, separating the resultant product streams to remove the hydrolysed hemicellulose and contacting the residual product stream to a mixture of ethanol and water to obtain a separate lignin stream and a cellulose stream. The cellulose stream can be further processed for the production of ethanol and the hydrolysed hemicellulose can be further processed for production of chemicals such as furfural and derivatives.

The lignin that gets dissolved in the ethanol and water mixture is recovered by subjecting the lignin stream to evaporation followed by sedimentation and filtration.

Lignocellulosic biomass material as referred to in the present invention is the naturally obtained cellulosic material comprising agriculture waste, forest residue, wood chips, straw, chaff, grain, grasses, corn, corn husks, weeds, aquatic plants, hay and any cellulose containing biological material or material of biological origin, also including municipal waste or waste. The subject process is in particularly suited for conversion of non-wood lignocellulose, particularly grass-derived lignocellulose. Typical grasses include wheat straw, but also miscanthus, sweet sorghum and bamboo.

The major constituents of lignocellulose typically include hemicelluloses in an amount of from 20 to 30%wt., an amorphous polymer of five and six carbon sugars; lignin in an amount of from 5 to 30%wt,, a highly cross-linked polymer of phenolic compounds; and cellulose in an amount of from 30 to 40%wt, a highly crystalline polymer of cellobiose, a glucose dimer. The cellulose, hemicellulose, and lignin are bonded together in a complex gel structure along with small quantities of extractives, pectins, proteins, and ash. Cellulose and hemicellulose, when hydrolysed into their sugars, can be converted into ethanol or other useful compounds through well established fermentation technologies. These sugars may also advantageously form the feedstock for production of a variety of chemicals and polymers, through microbial fermentation or through thermochemical processes, such as aqueous phase reforming. For the purpose of this invention the lignocellulosic biomass material preferably has an average constituent thickness of at most 2.5 cm, more preferably the thickness is up to 0.5 cm.

### Detailed description of the drawings

The pre-treatment process of the lignocellulosic biomass material according to the present invention is explained in detail in conjunction with the process flow diagram shown in FIG. 1.

As shown the process includes cooking (102) the biomass material at an elevated temperature in the presence of a mixture comprising water and formic acid. The acid treating step (102) is carried out in a reactor which is preferably a batch reactor, a continuously stirred tank reactor or a slurry reactor having an arrangement to move the lignocellulosic biomass mechanically. In operation, the reactor contains the lignocellulosic biomass material on which the solvent is preferably sprayed.

The formic acid serves the purpose of a catalyst thereby aiding the hydrolysis of the hemicellulose and also helps in destructuring (decomposing) of the lignin. the biomass-to-solvent mass ratio is preferably in the range of from 2:1 to 1:50, more preferably of from 1:5 to 1:20.

The percentage of formic acid in water used for the purpose of the present invention is in the range of 0.1% to 20% by weight.

The cooking step (102) is carried out preferably at temperatures in the range of from 100 to 200 °C, more preferably in the range of 130 to 180 °C. The acid treating step (102) is carried out at a temperature of at least 100°C, preferably in the range of 90°C to 120°C and at a pressure of at least 1 bar (a), preferably in the range of 1 bar (a) to 5 bar (a). The upper temperature limit in step (a) is largely determined by the thermal stability of the organic acids used, and preferably is at most 195°C, more preferably at most 180°C since formic acid becomes thermally instable at this temperature. A pressure of at most 10 bar (a) is maintained in the reactor for the effective hydrolysis of hemicellulose. The cooking step (102) is carried out for a time period typically in the range of from 0.3 to 10 hours, preferably in the range of from 0.5 to 5 hours.

In this step (102), at least a part of the hemicellulose is hydrolysed to monomer sugars. The sugars formed are mainly C5 sugars such as xylose. Further, the covalent linking of lignin to hemicellulose is weakened. The cooking step (102) results in the formation of two streams: a liquid stream comprising hydrolysed hemicellulose (monomeric sugars), preferably xylose, water and formic acid; and a solid stream comprising cellulose and destructured lignin. As previously mentioned, the cooking step (102) is catalysed by the presence of the formic acid water mixture. The formic acid- water mixture remaining at the end of this step is preferably processed for the recycling of the formic acid which is preferably carried out by methods such as pressure swing distillation, extraction or extractive distillation. These methods of recycling are well known in the prior art and have been well established in the case of formic acid.

The two streams formed as a result of the cooking step can preferably be separated using separation techniques for example a screw press. The separation step involves removal of liquid from the solid stream by pressing it out from the slurry resulting in the formation of two separate streams; a solid stream and a liquid stream. It is appreciated that the cooking step and the separation step can be preferably carried out simultaneously. The liquid stream containing the dissolved hemicellulose can be preferably further processed to obtain furfural derivatives such as levulinic acid.

In a preferred embodiment of the invention, the solid stream formed at the end of the cooking step (102) is subjected to a washing step (104). The purpose of the washing step is to remove the remnants of hemicellulose that may be present in the solid stream. The remnants are further mixed with the hydrolysed hemicellulose and may thereby be subjected to further processing. The resultant stream is devoid of hemicellulose and as previously mentioned comprises destructured lignin and cellulose.

The resultant stream obtained at the end of the washing step (104) is further subjected to a second washing step (106)

The purpose of the washing step (106) is to separate the destructured lignin and the cellulose. During the step (106), the solid stream is washed with alcohol and water mixture at mildly elevated temperature in the range of from 40 to 100 °C and a pressure below 4 bar (a), preferably in the range of from 2 to 4 bar (a). The mildly elevated temperature aids in the dissolution of the lignin in the alcohol-water mixture. The temperature is optimized preferably to 50 °C as a higher temperature can lead to the evaporation of the alcohol and lower temperature can be less effective in aiding dissolution of lignin. The residence time of the reaction is preferably 60 minutes. The alcohol used in the present invention preferably has less than about 4 carbon atoms so that it can be water-miscible. Preferably, an alcohol with carbon chain C1 to C3 are used, more preferably ethanol is used. The ratio of ethanol to water used in the present invention varies in the range of from 1:10 to 10:1. At the end of the washing step (106), a liquid stream comprising lignin is obtained as it gets partially dissolved in the alcohol and water mixture. The cellulose which is primarily the only component left as a solid is in the form of an undissolved cake. The cellulosic stream obtained is preferably essentially free of re-precipitated lignin because the lignin and other dissolved materials remain in solution at all temperatures of the reaction. Hence, a solid stream comprising undissolved cellulose and a liquid stream comprising lignin constitute the product streams of the washing step 106. The washing step (106) is preferably followed by a separation step in order to recover the lignin and the cellulose. The product streams formed are preferably subjected to a filtration step, preferably using a filter press, the filtration step is preferably vacuum aided to speed up the process. The solid stream containing cellulose is retained on the filter mesh and the liquid lignin stream is collected as a filtrate in the vessel. This cellulose may preferably be dried before it is subjected to further processing.

The liquid lignin stream obtained as the filtrate after the separation of cellulose may then preferably be further processed for the recovery of lignin. The liquid lignin stream is preferably subjected to an evaporation step (108) preferably in a vacuum rotary evaporator where the alcohol from the alcohol water mixture gets evaporated leading to the precipitation of lignin. The evaporation step (108) is preferably carried out at a temperature range of from 40 to 50 °C, and preferably at a pressure in the range of from 100 to 300 mbar. The precipitated lignin is preferably further subjected to a sedimentation step (110) followed by a separation step (112) so that the lignin is separated and can eventually be isolated. The sedimentation step (110) may be vacuum aided to increase the efficiency of the process. The separation step (112) is preferably carried out by filtration using a membrane filter with a porosity of 0.1µm or by centrifugation for the purpose of the invention. The ethanol and the liquid water stream obtained at the end of the step (112) are referred to as an aqueous spent stream. The aqueous spent stream comprises a part of lignin and hydrolysed sugars.

The cellulose and the lignin obtained by the aforementioned process may preferably undergo further upgrading before they are provided for commercial use. The upgraded products obtained from the cellulose and the lignin are within the scope of the present invention

Generally, the cellulose-rich solid product obtained by the aforementioned process can preferably be used in industrial cellulose applications directly, with or without drying, or subjected to further processing to either modify the cellulose or convert it into glucose. The cellulose-rich solid product can be processed into paper products by any convenient methods (Macdonald, Papermaking and Paperboard Making, Vol. 3, TS 1048.J66, 1969). The solid product is also useful as fluff pulp, which is commonly used in absorbent applications such as diapers and consumer wipes. Cellulose recovered from the solid phase is particularly suitable for manufacturing dissolving pulp (also known as .quadrature.-cellulose), when its purity is 85% by weight or more. In some cases, cellulose of that purity is obtained simply by washing and drying the separated solid phase. If needed, the recovered cellulose can be further purified using various techniques, such as bleaching. Cellulose having a purity of 95 wt % or more can be obtained in this manner. The cellulose obtained in the process of the invention in most cases is easily and rapidly hydrolyzed to glucose and soluble glucose oligomers. The presence of lignin on the surface of the cellulose fibres is believed to hinder the enzymatic hydrolysis of cellulose for the formation of sugars. The lignin is believed to form a physical barrier to water, thus causing the hydrolysis to proceed slowly. In this invention, the efficient removal of lignin exposes more cellulose at the surface of the fibres, allowing better contact with water (and added enzymes or other catalyst), and therefore increasing the rate of reaction. The cellulose can be catalytically or thermally converted to various organic acids, alcohols and other materials.

Lignin produced in accordance with the invention has high purity. It is essentially free from sulphur and other chemicals and can be used as a fuel. As a solid fuel, lignin is similar in energy content to coal. Lignin can act as an oxygenated component in liquid fuels, to enhance octane while meeting standards as a renewable fuel. The lignin produced herein preferably can also be used as polymeric material, and as a chemical precursor for producing lignin derivatives. The lignin can be mixed with formaldehyde up to 20% and hence can be used in the preparation of polyphenolic polymers such as Bakelite. The process according to the invention is further illustrated by means of the following non-limiting simulated example.

### Example 1

In a process line-up as shown in the Figure, 20 grams of bagasse was treated with 1% formic acid aqueous solution at 150°C for 3 hours, with a mass ratio of 1:10 (bagasse:formic acid aqueous solution).The residue was washed with water (1:10, bagasse:water) first to remove remnant hemicellulose, and then washed with water/ethanol (1/1) with a mass ratio of 1:10 (bagasse: water-ethanol) to remove lignin. Finally, about 32.6%wt. of dry bagasse dissolved in 1% formic acid aqueous solution, and another 11.1%wt. dissolved in water/ethanol wash, 56.3% remained as the cellulosic residue. The water/ethanol wash was evaporated at 47°C and 200 mbar in a vacuum rotary evaporator to remove ethanol, till no obvious vapor came up. Lignin precipitated out as very fine particles. It was recovered by first sedimentation and then filtration with membrane (0.1 µm) or centrifugation. About 36.2% of dissolved biomass in water/ethanol wash precipitated as lignin.

Unless otherwise defined, the % refer to %wt.herein.

## Claims

1. A process for treating lignocellulosic biomass material, comprising the steps of:
(a) contacting the lignocellulosic biomass material with a solvent comprising water and formic acid at a temperature in the range of from 100 °C to 200 °C and at a pressure of at most 10 bar (a) to obtain a first liquid stream comprising hydrolysed hemicellulose and a second stream comprising lignin and cellulose;
(b) separating the first liquid stream from the second stream;
(c) washing the second stream obtained in step (a) with water and a solvent soluble in water to obtain a liquid stream comprising lignin and a solid residue comprising cellulose;
(d) subjecting the liquid stream obtained in step (c) to at least one of evaporation and distillation to obtain a slurry comprising precipitated lignin; and
(e) subjecting the slurry obtained in step (d) to sedimentation followed by anyone of filtration and centrifugation to obtain lignin and a spent aqueous stream.

2. The process according to claim 1 wherein the amount of formic acid used is from 0.1% to 20% vol.

3. The process according to claim 1 or 2, wherein the solvent soluble in water is ethanol.

4. The process according to 3, wherein water to ethanol ratio in step (c) is in the range of from 1: 10 to 10:1.

5. The process according to any one of the preceding claims, wherein the solid residue comprising cellulose obtained in step (c) is dried to obtain cellulose.

6. The process according to anyone of claims 1 to 5 comprising subjecting the slurry obtained in step (e) to a pH adjustment step to further recover the lignin as a precipitate.

7. The process according to anyone of claims 1 to 6 wherein the spent aqueous stream obtained in step (e) comprises a part of the lignin and hydrolysed sugars.

8. The process according to anyone of claim 1 or 2 wherein the biomass to solvent ratio is in the range of from 1:2 to 1:10.

9. The process according to claim 1 further comprising washing the second stream obtained in step (a) with water to remove remnants of hemicellulose.
